# EUROPEAN PATENT APPLICATION

(11) **EP 2 728 396 A1**
(43) Date of publication of application: **07.05.2014**
(21) Application number: 13191338.6
(22) Date of filing: 04.11.2013
(51) Int. Cl.: G02B 27/01, G09G 5/377, G06T 19/00, G06F 3/01, H04N 21/414, H04N 21/4223

(54) **Image display utilizing programmable and multipurpose processors**

(30) Priority: 05.11.2012 US 201213668419
(71) Applicant: Exelis, Inc., McLean, VA 22102 (US)
(72) Inventor: Kaplan, David B., Vinton, Virginia 24179 (US)
(74) Representative: DREISS Patentanwälte PartG mbB

(57) **Abstract**

A display apparatus includes a programmable processor which receives sensor data and generates a first video signal. The apparatus further incudes a second processor configured to run an operating system and generates a second video signal. Video mixing logic of the display apparatus is configured to combine the first video signal and the second video signal into a third video signal which is displayed to the user on a display.

## Description

### TECHNICAL FIELD

The present disclosure relates to image display devices, and in particular, user wearable image display devices such as night vision goggles and augmented reality goggles.

### BACKGROUND

Wearable display devices, such as night vision goggles, utilize field programmable gate arrays (FPGA) to perform image and video processing. FPGAs may be cheaper for specialized implementations, such as the processing used in night vision goggles. For example, because FPGAs can be programmed according to their specific use, a long and expensive application specific integrated circuit (ASIC) design process can be avoided. Similarly, the expensive establishment of a specific ASIC production line can also be avoided.

However, the benefits of FPGAs may be accompanied with tradeoffs in flexibility. For example, after programming an FPGA for a specific application, there may be an insufficient number of logic elements left in the FPGA to allow the FPGA to perform additional functions. Furthermore, as FPGAs will have a custom design, programming software applications to run on an FPGA may be expensive, and the number of individuals with the skill necessary to perform this programming may be limited.

### BRIEF DESCRIPTION OF THE DRAWINGS

FIG. 1 is an example image display device.

FIG. 2 is a second example image display device.

FIG. 3 is an example power supply structure for an image display device.

FIG. 4 is a second power supply structure for an image display device.

FIG. 5 is a flowchart illustrating a process for displaying an image.

### DESCRIPTION OF EXAMPLE EMBODIMENTS

Overview

A display apparatus includes a programmable processor which receives sensor data and generates a first video signal. The apparatus further incudes a second processor configured to run an operating system and generate a second video signal. Video mixing logic of the display apparatus is configured to combine the first video signal and the second video signal into a third video signal which is displayed to the user on a display.

Example Embodiments

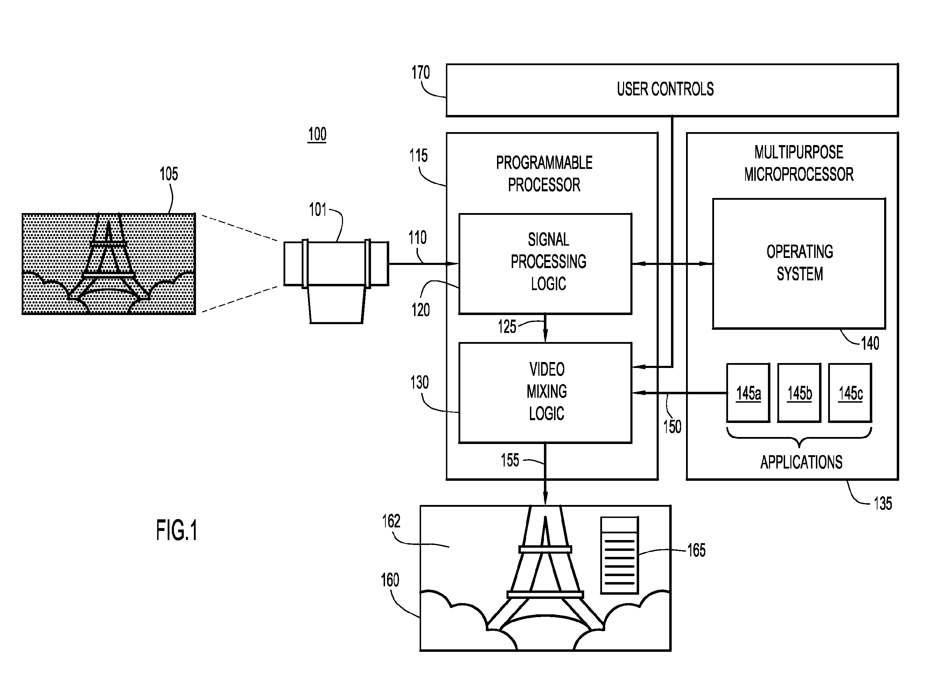

Depicted in FIG. 1 is an image display apparatus 100 in which an image sensor 101 receives image 105. Image data 110 is sent to a first processor, in this example, programmable processor 115. Programmable processor 115 applies signal processing to the received image data through image processing logic 120 thereby generating a first video signal 125. The resulting first video signal 125 is sent to video mixing logic 130.

Image display apparatus 100 also comprises a second processor, in this example, multipurpose microprocessor 135. Multipurpose microprocessor 135 runs both operating system 140 and applications 145a-c. Applications 145a-c are configured to run according to operating system 140, and produce a second video signal 150 which is also sent to video mixing logic 130. Applications 145a-c can add additional functionality to the display apparatus beyond that which is provided by programmable processor 115.

Having received first video signal 125 and second video signal 150, video mixing logic 130 combines the two signals into a third video signal 155. Video signal 155 is sent to a display to produces image 160. According to specific examples, the video signal 155 may be used to display image 160 as the output image of night vision or augmented reality goggles.

The video signal produced by the programmable processor, first video signal 125, may comprise a main portion 162 of image 160. Accordingly, when video mixing logic 130 combines the first video signal 125 with second video signal 150, third video signal 155 incorporates the main image 162 provided by the first video signal 125 with the application data in second video signal 150 to form image 160.

Image 160 includes the main image 162 comprising the enhanced version of the image detected by image sensor 101 along with application data 165. Therefore, information about the main image 162 can be displayed in the same video image as the additional information 165 provided by application 145a. For example, application 145a may be able to read global position system (GPS) coordinates for the user of display device 100. Accordingly, application 145a can provide application information in video signal 150 which is specific to the position of the user. Therefore, the application data 135 may be specific to the location depicted in main image 162.

User controls 170 are provided to control the operation of both the programmable processor 115, and its accompanying logic, as well as multipurpose microprocessor 135 and applications 145a-c.

If the image display apparatus is embodied in a user-wearable device, such as a night vision or augmented reality goggle, the image sensor 101 will receive real-time image data for images that are in the user's field of view. Accordingly, the main portion of image 160 may be comprised of the images that would be present in a user's field of view.

"Real-time," as used herein, means the images were captured, processed and/or displayed to the user without any appreciable lag between the time the images were captured by image sensor 101, and when they are processed and/or displayed. This may mean that the capturing, processing, and/or displaying of the images takes place within milliseconds of when the events captured in the image data actually took place.

Upon receiving the real time image data 110, the signal processing logic 120 may apply contrast enhancement and other video enhancements to the video data 110. According to other examples, the received video data 110 may be received from an image intensifier, and the signal processing logic 120 will apply additional processing, such as sharpening the image provided by the image intensifier. In other examples, image sensor 101 comprises a thermal image sensor, and signal processing logic 120 serves to convert the thermal image data 110 into first video signal 125.

In order to provide signal processing logic 120 and video mixing logic 130, the programmable processor 115may comprise a field programmable gate array (FPGA). An FPGA is an integrated circuit designed to allow custom configuration of its logic after manufacturing. The logic of an FPGA can be changed through the use of a hardware description language (HDL), such as VHDL or Verilog, but these languages may be complicated to use and learn. Furthermore, due to the complexity of the logic needed to perform signal processing and/or video mixing, there may be insufficient logical elements in an FPGA to provide additional functionality. Accordingly, adding additional features and functionality to FPGAs can be difficult, if not impossible, and expensive. Multipurpose microprocessor 135 may be included in display device 100 in order to provide this additional functionality.

The video signal produced by the multipurpose microprocessor, second video signal 150, may include application data provided by applications 145a-c. For example, application 145a may provide additional information about the location in which the user of the device is located, and therefore, second video signal 150 may include a video representation of this data to video mixing logic 130.

According to other examples, the application data may provide for communication between the user and a remote party. For example, the application data included in second video signal 150 may include short message service (SMS) messages, or other text based communication information. According to yet other examples, the application data may comprise other information, such as weather information for the area in which the user is located. In other examples, the application data may be configured to modify the first video signal to include components for gaming or entertainment purposes. For example, the application data may place virtual terrain, teammates and opponents into the first video signal.

To provide possible benefits such as easy application development, easy access to application developers, and readily available processors and software, the multipurpose microprocessor may be a commercially available microprocessor, and the operating system may be a commercially available operating system. For example, the multipurpose microprocessor may be selected from the class of microprocessors used in commercially available computers, notebook computers, tablets, mobile devices, smartphones, and other consumer electronic and computer devices.

Specifically, the microprocessor may be selected from commercially available processors, including reduced instruction set (RISC) and complex instruction set (CISC) architectures. Specific examples include microprocessors based on Atmel's AVR architecture, Microchip's PIC architecture, Texas Instruments's MSP430 architecture, Intel's 8051 architecture, Zilog's Z80 architecture, Western Design Center's 65816 architecture, Hitachi's SuperH architecture, Axis Communications' ETRAX CRIS architecture, Power Architecture (formerly PowerPC), EnSilica's eSi-RISC architecture, Milkymist architecture, the x86 architecture including Intel's IA-32, x86-32, x86-64 architectures, as well as AMD's AMD64 and Intel's Intel 64 version of it, Motorola's 6800 and 68000 architectures, MOS Technology's 6502 architecture, Zilog's Z80 architecture, the Advanced RISC Machines' (originally Acorn) ARM and StrongARM/XScale architectures, and Renesas RX CPU architecture. For mobile devices, such as night vision and augmented reality goggles, low power architectures such as the ARM and StrongARM/XScale architectures may be used.

The operating system selected to run on microprocessor 135 may be a commercially available operating system. Specifically, the operating system may be selected for easy application development due to readily available developers, or the existence of robust application development tools. For example, the operating system may be chosen from commercially available operating systems such as the Android family of operating system, the Chrome family of operating system, the Windows family of operating systems, the MacOS family of operating systems, the IOS family of operating systems, the UNIX family of operating systems, the LINUX family of operating systems, and others.

For mobile devices, Android-, IOS-, Windows 8-, and Windows Phone-based operating systems may be selected. When combined with a lower-power processor, such as an ARM processor, a mobile operating system, such as the Android operating system, may provide a low power platform for implementing applications 145a-c.

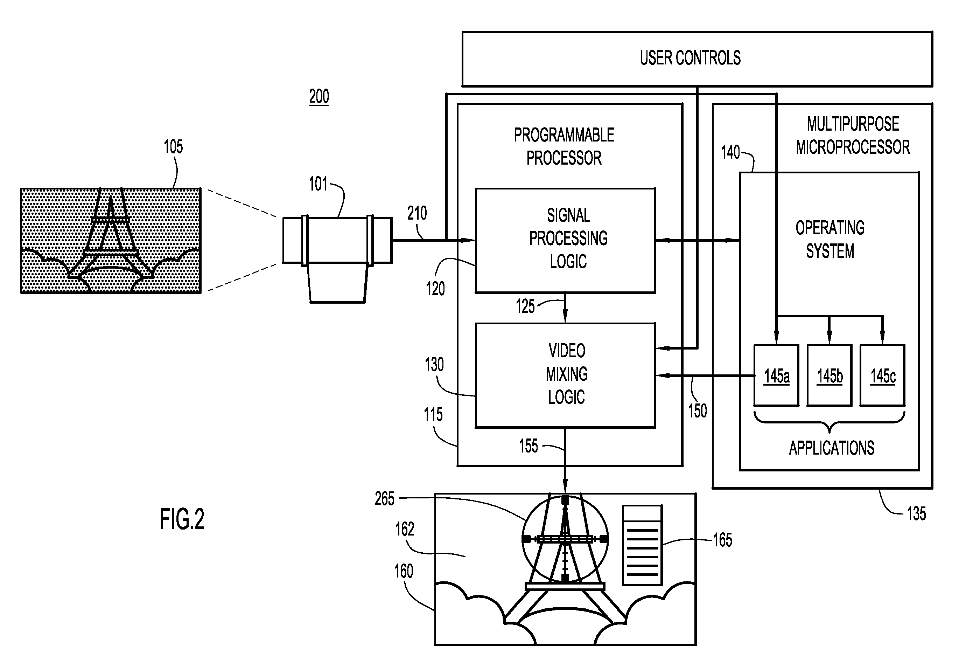

With reference now made to FIG. 2, depicted therein is another example image display apparatus 200. Like components between image display apparatus 200 and image display apparatus 100 of FIG. 1 have been identified with like reference numerals.

In image display apparatus 200 image sensor 101 provides the image data 210 to both the programmable processor 115 and the multipurpose microprocessor 135. Because the multipurpose microprocessor 135 receives video data 210, applications 145a-c can provide application data which is dependent on the content of image data 210. For example, application 145a may be used to locate specific items within the main image 162. Specifically, if application 145a knows that a particular item of interest such as a landmark is close to the user from, for example GPS data, application 145a may be able to locate the item of interest in the image data 210. Accordingly, when the first video signal 125 and the second video signal 150 are combined to form the third video signal 155, third video signal 155 may include crosshairs 265 to exactly locate the item of interest in the combined, third video signal 155.

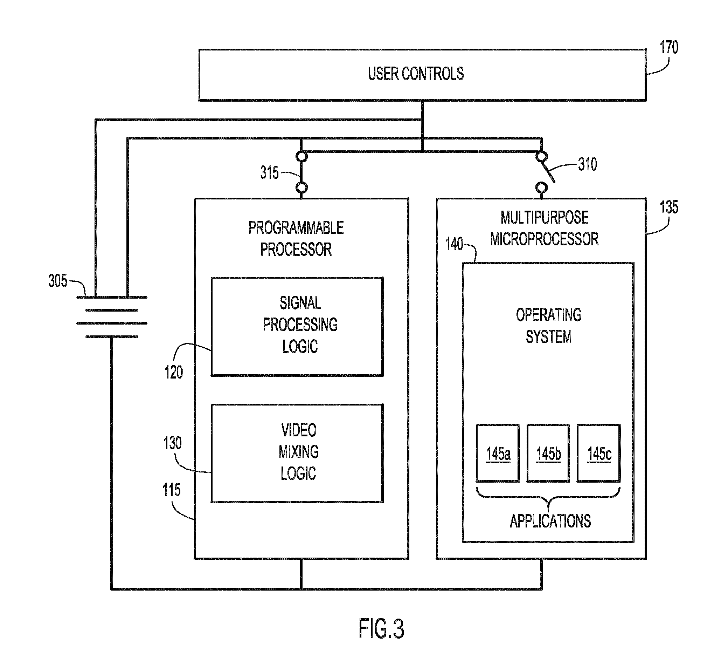

With reference now made to FIG. 3, depicted therein is a schematic illustration of a power supply system for the programmable processor 115 and the multipurpose microprocessor 135. Specifically, programmable processor 115 and multipurpose microprocessor 135 are connected in parallel to power supply 305. Accordingly, programmable processor 115 can be powered on and off independently from multipurpose microprocessor 135, and vice versa.

If the user wishes to continue to use the image sensor to provide enhanced video, but application data is no longer needed, user controls 170 can be used to power off multipurpose processor 135. According to the example of FIG. 3, the user controls 170 can be used to operate switch 310, thereby depowering multipurpose processor 135. Because the programmable processor 115 and multipurpose multiprocessor 135 are connected to power supply 305 in parallel, cutting power to either of programmable processor 115 and multipurpose microprocessor 135 does not affect the power flow to the other device.

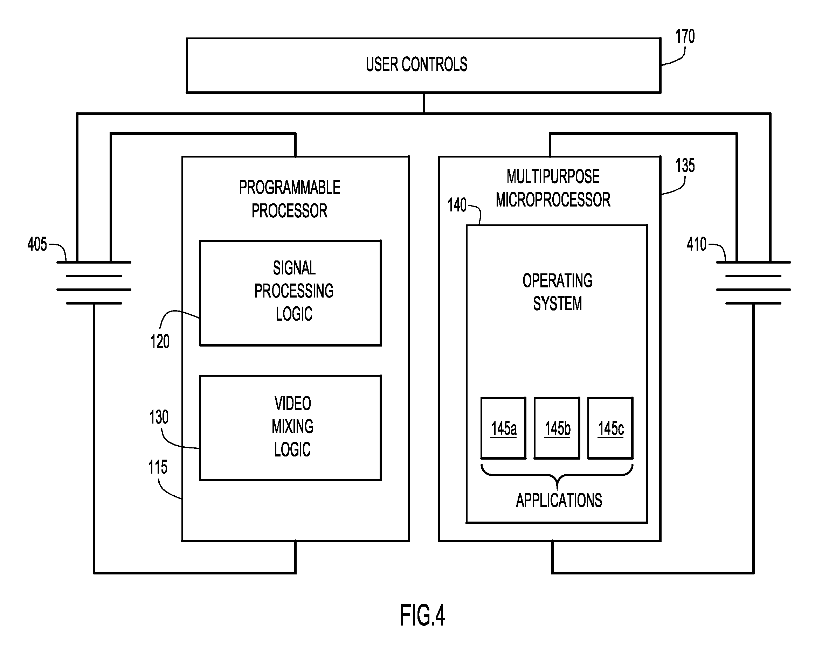

Turning to FIG. 4, illustrated therein is another schematic representation of a power supply system for programmable processor 115 and multipurpose microprocessor 135. As depicted, each of programmable processor 115 and multipurpose processor 135 have their own power supply, power supplies 405 and 410, respectively. Accordingly, user controls 170 can be use to power on and off programmable processor 115 and multipurpose processor 135 independently from each other. Accordingly, if the user wishes to continue to use the image sensor to provide enhanced video, but application data is no longer needed, user controls 170 can be used to power on power supply 405 and power off power supply 410, thereby providing power to programmable processor 115 while cutting power to multipurpose microprocessor 135.

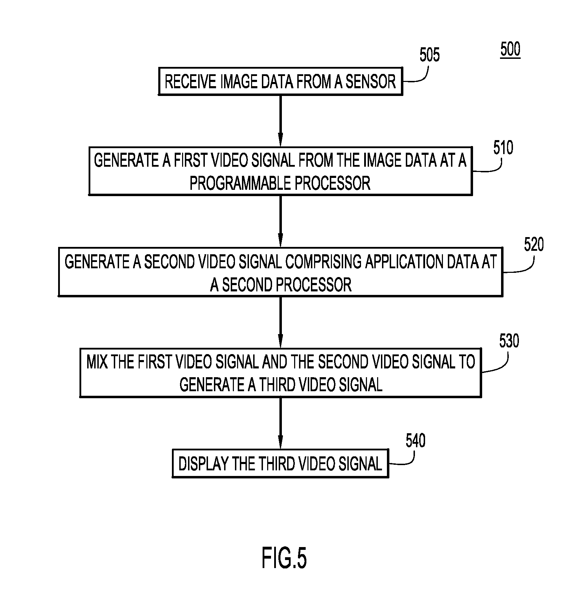

With reference now made to FIG. 5, depicted therein is a flow chart 500 illustrating a process for displaying an image. The process begins in step 505 when image data is received from an image sensor. The image data may be raw, unmodified image data, or modified image data. For example, the image sensor may comprise an image intensifier. Accordingly, the image data may comprise enhanced image data. Furthermore, the image sensor may comprise a thermal sensor, and therefore, the image data may comprise a thermal image.

In step 510 a first video signal is generated from the image data at a programmable processor. For example, the generation of the first video signal may be carried out by an FPGA.

In step 520 a second video signal is generated which comprises application data. The second video signal is generated in a multipurpose microprocessor, and may or may not be based upon the image data received from the sensor. The multipurpose microprocessor may comprise a commercially available processor, such as a processor based on the ARM architecture, and the operating system may be a commercially available operating system, such as an operating system from the Android family of operating systems.

In step 530 the first video signal and the second video signal are mixed to generate a third video signal. The third video may comprise application data overlayed on the video signal corresponding to the images captured by the sensor. Once overlayed on the first video signal, the application data may identify elements within the first video signal, or provide additional information about the area depicted in the first video signal. According to other examples, the application data may display communication data between the user and a remote party placed over top of the first video signal. According to yet other examples, the application data may comprise other information, such as weather information for the area in which the user is located. The mixing of the first and second video signals may also result in the application data modifying the first video signal to include, for example, components for gaming or entertainment purposes. Specifically, the application data may place virtual terrain, teammates and opponents into the first video signal.

Finally, in step 540, the third video signal is displayed. If the method of flowchart 500 is displayed in night vision goggles, the third video signal may be displayed in the eye piece of the goggles.

The above description is intended by way of example only.

## Claims

1. An apparatus comprising:
a programmable processor receiving sensor data and generating a first video signal;
a second processor configured to run an operating system and generating a second video signal;
video mixing logic configured to combine the first video signal and the second video signal into a third video signal, and
a display configured to display the third video signal.

2. The apparatus of claim 1, wherein the programmable processor comprises a field programmable gate array.

3. The apparatus of claim 2, wherein the second processor comprises a multipurpose microprocessor.

4. The apparatus of claim 1, wherein preferably the operating system is a commercial operating system configured to run on the second processor, wherein the second processor executes instruction for an application configured to run in the commercial operating system; and wherein the second video signal comprises video output produced by the application.

5. The apparatus of claim 1, wherein the display is implemented in a user-wearable device, wherein preferably the user-wearable device comprises an image enhancement device.

6. The apparatus of claim 5, wherein:
the programmable processor is configured to receive real-time image data and generate the first video signal comprising real-time video; and
the video mixing logic is configured to generate the third video signal comprising real-time video; and
the display is configured to display the third video signal in real-time.

7. The apparatus of claim 5, further comprising a thermal imaging sensor sending the sensor data to the programmable processor.

8. The apparatus of claim 5, wherein the image enhancement device comprises a night vision device.

9. The apparatus of claim 1, wherein the video mixing logic is programmed into the programmable processor.

10. The apparatus of claim 1, wherein the programmable processor and the second processor are configured to be separately powered on and off.

11. A method of displaying an image, comprising:
receiving image data from a sensor;
generating a first video signal from the image data at a programmable processor;
generating a second video signal comprising application data at a second processor;
mixing the first video signal and the second video signal to generate a third video signal;
and
displaying the third video signal on a display.

12. The method of claim 11 wherein:
generating the first videos signal comprises enhancing the image data in real-time;
mixing the first video signal comprises mixing the signals in real time, and
displaying the third video signal comprises displaying the signal in real time.

13. The method of claim 11, wherein receiving image data comprises receiving image data from an image intensifier.

14. The method of claim 11, wherein generating the second video signal comprises generating the second video signal with a multipurpose microprocessor.

15. The method of claim 11, wherein generating the first video signal comprises generating the first video signal using a field programmable gate array.
